# EUROPÄISCHE PATENTSCHRIFT

(11) **EP 0 420 321 B1**
(45) Veröffentlichungstag und Bekanntmachung des Hinweises auf die Patenterteilung: **21.06.1995**
(21) Anmeldenummer: 90202452.0
(22) Anmeldetag: 17.09.1990
(51) Int. Cl.: H04N 5/08

(54) **Synchronsignal-Detektor**
Synchronizing signal detector
Détecteur de signal de synchronisation

(30) Priorität: 23.09.1989 DE 3931860
(43) Veröffentlichungstag der Anmeldung: 03.04.1991
(73) Patentinhaber: Philips Patentverwaltung GmbH, 22335 Hamburg (DE); Philips Electronics N.V., 5621 BA Eindhoven (NL)
(72) Erfinder: Pletz-Kirsch, Gerhard, D-2000 Hamburg 62 (DE); Lenth, Jürgen, D-2000 Hamburg 54 (DE)
(74) Vertreter: von Laue, Hanns-Ulrich, Dipl.-Ing.

(56) Entgegenhaltungen:
- US-A- 4 468 625
- US-A- 4 697 211

## Beschreibung

Die Erfindung betrifft eine digitale Schaltungsanordnung zur Detektion von in einem digitalen Fernsehsignal enthaltenen Horizontal- oder Vertikal-Synchronisationsimpulsen, deren Amplitude sich etwa bis zu einem Spitzenpegel hin erstreckt, mit einer Abtrennstufe, in der diejenigen Signalanteile des Fernsehsignals, die einen Schneidepegel in Richtung auf den Spitzenpegel überschreiten, abgetrennt werden.

Bei derartigen Schaltungsanordnungen zur Detektion der Synchronisationsimpulse werden diese meist dadurch detektiert, daß diejenigen Signalanteile des Fernsehsignals, die einen Schneidepegel in Richtung auf den Spitzenpegel überschreiten, in einer Abtrennstufe abgetrennt werden. Die abgetrennten Signalanteile stellen dann quasi die Synchronisationsimpulse dar. Diese Vorgehensweise ist jedoch bei gestörtem Fernsehsignal mit beträchtlichen Fehlern behaftet. Weisen nämlich die Synchronisationsimpulse nicht immer eine ausreichende Amplitude auf, die den Schneidepegel überschreitet, so werden keine Synchronisationsimpulse abgetrennt. Eine weitere Problematik liegt darin, daß der Schneidepegel oftmals nicht den richtigen Wert aufweist und auf diese Weise falsche oder keine Synchronisationsimpulse detektiert werden.

Bei den meisten bekannten Schaltungsanordnungen wird der Schneidepegel dadurch gewonnen, daß zu den Zeitpunkten, in denen Synchronisationsimpulse erwartet werden, was beispielsweise durch einen nachgeschalteten Phasenregelkreis ermittelt wird, der Pegel des Fernsehsignals festgestellt wird und daraufhin der Schneidepegel auf einen etwas geringeren Pegel festgelegt wird. Diese Vorgehensweise funktioniert jedoch nur, wenn die Zeitpunkte, in denen der Pegel des Fernsehsignals festgestellt wird, genau mit den Synchronisationsimpulsen zusammenfallen. Bei einer auch nur geringfügigen Desynchronisation des nachgeschalteten Phasenregelkreises wird beispielsweise der Pegel des Fernsehsignals im Bereich der Schwarzschulter des Signals festgestellt. Dies führt dann sofort zu einem falschen Schneidepegel.

Aus der europäischen Patentanmeldung EP-A-0 244 239 ist eine Abtrennschaltung für Synchronisationsimpulse bekannt, bei der die Flanken der Synchronisationsimpulse detektiert werden. Das dabei gewonnene Signal wird benutzt, um den Schneidepegel zu generieren. Hierbei sind jedoch feste Annahmen über die Flankensteilheit der Synchronisationsimpulse notwendig. Nur bei Vorliegen dieser Randbedingungen können die Flanken der Impulse detektiert werden. Wenn jedoch die Kriterien für die Flanken nicht mehr erreicht werden, nämlich z.B. bei gestörtem Fernsehsignal, kann ein falscher Signalanteil des Fernsehsignals als Synchronisationsimpuls detektiert werden. Dies führt dann zu einer falschen Festlegung des Schneidepegels mit den oben beschriebenen Folgen.

Es ist Aufgabe der Erfindung, eine digitale Schaltungsanordnung der eingangs genannten Art anzugeben, welche insbesondere bei gestörtem Fernsehsignal eine sicherere Erkennung der Synchronisationsimpulse gestattet.

Diese Aufgabe ist erfindungsgemäß dadurch gelöst, daß ein Pegel-Detektor vorgesehen ist, welcher während der Zeiten, in denen in der Abtrennstufe Fernsehsignalanteile abgetrennt werden und gleichzeitig der aktuelle Abtastwert einen abgespeicherten Abtastwert in Pegel-Richtung der Synchronisationsimpulse überschreitet, den abgespeicherten Abtastwert durch den akutellen ersetzt und einen Markierungsimpuls generiert, daß in jedem Zeitintervall zwischen aufeinanderfolgenden Synchronisationsimpulsen der gespeicherte Abtastwert zu einem vorgebbaren, für alle Zeitintervalle identischen Zeitpunkt gelöscht wird und daß der jeweils letzte Markierungsimpuls vor dem Löschen des gespeicherten Abtastwertes einen detektierten Synchronisationsimpuls markiert.

Zwischen aufeinanderfolgenden Synchronisationsimpulsen wird zu einem festgelegten Zeitpunkt, der für alle Zeitintervalle identisch ist, der Speicher, der den Abtastwert enthält, gelöscht. Beginnend mit diesem Zeitpunkt wird also jeweils der aktuelle Abtastwart mit dem Wert Null verglichen, so daß bei der ersten Abtrennung von Signalanteilen in der Abtrennstufe der dann auftauchende Abtastwert mit großer Wahrscheinlichkeit größer ist als Null, so daß dieser Abtastwert in den Speicher geladen wird und gleichzeitig ein Markierungsimpuls gesetzt wird. Nachfolgend wird nur noch dann ein Markierungsimpuls bei Abtrennung von Signalanteilen in der Abtrennstufe generiert, wenn gleichzeitig der Abtastwert einen größeren Wert aufweist als der abgespeicherte Abtastwert. Dies setzt sich fort bis zu dem nächsten Löschvorgang des Speichers. Auf diese Weise ist sichergestellt, daß der letzte, zwischen zwei Löschvorgängen des Speichers auftretende Markierungsimpuls derjenige ist, der mit einem maximalen Pegel des Fernsehsignals einherging. Dieser Markierungsimpuls markiert also den detektierten Synchronisationsimpuls.

Bei dieser Schaltungsanordnung zur Detektion der Synchronisationsimpulse werden also zwei Kriterien eingesetzt. Als erstes Kriterium muß das Fernsehsignal den Schneidepegel in Richtung auf den Spitzenpegel überschreiten. Diese Signalanteile werden in bekannter Weise in einer Abtrennstufe abgetrennt. Da, wie oben beschrieben, der Schneidepegel aber unter Umständen einen falschen Wert aufweisen kann, wird ein zweites Kriterium eingesetzt. Dieses zweite Kriterium besteht darin, daß gleichzeitig der relative Pegel der Abtastwerte zur Feststellung der Synchronisationsimpulse herangezogen wird. Es wird dabei davon ausgegangen, daß der Synchronisationsimpuls den größten Pegel aufweist. Diese Annahme dürfte selbst bei gestörtem Fernsehsignal noch zutreffen. Schwankungen des Pegels des gesamten Fernsehsignals oder auch der Synchronisationsimpulse wirken sich nicht mehr störend aus, da in jedem Zeitintervall zwischen zwei Löschvorgängen des Speichers die Pegeldetektion von Null beginnend neu vorgenommen wird und sich deshalb schwankende Pegel des Fernsehsignals nicht negativ auswirken. Auch müssen keine festen Annahmen über den Pegel der Synchronisationsimpulse bzw. über deren Impuslform gemacht werden.

Ein weiterer Vorteil dieser Schaltungsanordnung liegt darin, daß die Art und Weise, in der der Schneidepegel festgelegt wird, frei ist. In jedem Falle wird auch bei falschem Schneidepegel die Synchronisation eines nachfolgenden Phasenregelkreises wesentlich erleichtert, da der letzte Markierungsimpuls zwischen zwei Löschvorgängen des Speichers auch bei falsch festgelegtem Schneidepegel mit großer Wahrscheinlichkeit den richtigen Synchronisationsimpuls angibt. Auf diese Weise wird ein nachgeschalteter Phasenregelkreis wesentlich schneller aufsynchronisiert. Sollte der Spitzenpegel in Abhängigkeit der Signale eines nachgeschalteten Phasenregelkreises dadurch festgelegt werden, daß zu den erwarteten Zeitpunkten der Snychronisationsimpulse dem Fernsehsignal ein Pegelwert entnommen wird, in dessen Abhängigkeit der Pegel des Spitzenpegels festgelegt wird, so wird, da der Phasenregelkreis sehr schnell richtig aufsynchronisiert wird, der Wert des Spitzenpegels auch schnell auf den richtigen Wert korrigiert.

Darüber hinaus arbeitet die Schaltungsanordnung sehr störsicher, da sämtliche Störungen, die das Fernsehsignal in Pegelrichtung der Synchronisationsimpulse aufweist, die jedoch deren Pegel nicht erreichen, unterdrückt werden und nicht zu einer Störung der Synchronisation nachgeschalteter Schaltungsanordnungen, beispielsweise eines Phasenregelkreises, führen.

Nach einer weiteren Ausgestaltung der Erfindung ist vorgesehen, daß der Zeitpunkt, zu dem in allen Intervallen der gespeicherte Abtastwert gelöscht wird, am Ende des aktiven, den Bildinhalt enthaltenten Teils einer Bildzeile liegt.

Ausgehend von diesem Zeitpunkt des Löschens des Speichers ist der nächste auftretende Markierungsimpuls mit relativ großer Wahrscheinlichkeit bereits derjenige, welcher eine Detektion des tatsächlichen Synchronisationsimpulses darstellt, da kurz nach dem Löschvorgang die Austastlücke und in dieser der Synchronisationsimpuls auftritt. Bei ungestörtem Fernsehsignal werden nach diesem ersten Markierungsimpuls keine weiteren auftreten.

Nach einer weiteren Ausgestaltung der Erfindung ist vorgesehen, daß der Schaltungsanordnung ein einen Zähler aufweisender digitaler Phasenregelkreis nachgeschaltet ist und daß das Löschen des abgespeicherten Abtastwertes bei einem vorgebbaren Zählerstand des Zählers ausgelöst wird.

Einer digitalen Schaltungsanordnung nach der Erfindung wird im allgemeinen ein digitaler Phasenregelkreis nachgeschaltet werden. Digitale Phasenregelkreise weisen einen Zähler auf, welcher in dem Phasenkomparator dazu dient, die Phasendifferenz zwischen dem Signal des Phasenregelkreises und des von außen zugeführten Signals festzustellen. Dieser Zähler kann nun vorteilhaft gleichzeitig dazu eingesetzt werden, zu bestimmten Zeitpunkten zwischen zwei aufeinanderfolgenden Synchronisationsimpulsen eine Löschung des Abtastwert-Speichers vorzunehmen.

Nach einer weiteren Ausgestaltung der Erfindung ist vorgesehen, daß die Markierungsimpulse einem in dem Phasenregelkreis vorgesehenen Phasenkomparator zugeführt sind und daß nur der letzte, vor dem vorgebbaren Zählerstand ermittelte Phasenmeßwert einem dem Phasenkomparator nachgeschalteten Schleifenfilter zugeführt wird.

Bei digitalen Phasenregelkreisen ist es auf einfache Weise möglich, von mehreren in einem Zeitintervall ermittelten Phasenmeßwerten nur einen weiterzuverarbeiten, d.h. also z.B. einem nachgeschalteten Schleifenfilter zuzuführen. Es kann so auf einfache Weise nur der jeweils letzte Markierungsimpuls vor einem Löschvorgang des Speichers in der erfindungsgemäßen Schaltungsanordnung ausgewertet werden.

Anhand der Zeichnung wird ein Ausführungsbeispiel der Erfindung näher erläutert. Es zeigen:
Fig. 1 ein Prinzipschaltbild einer digitalen Schaltungsanordnung zur Detektion von Horizontal-Synchronisationsimpulsen,
Fig. 2 den zeitlichen Verlauf einiger, in der Schaltungsanordnung nach Fig. 1 auftretender Signale bei richtig festgelegtem Schneidepegel,
Fig. 3 die Signale nach Fig. 2, jedoch bei falsch festgelegtem Schneidepegel.

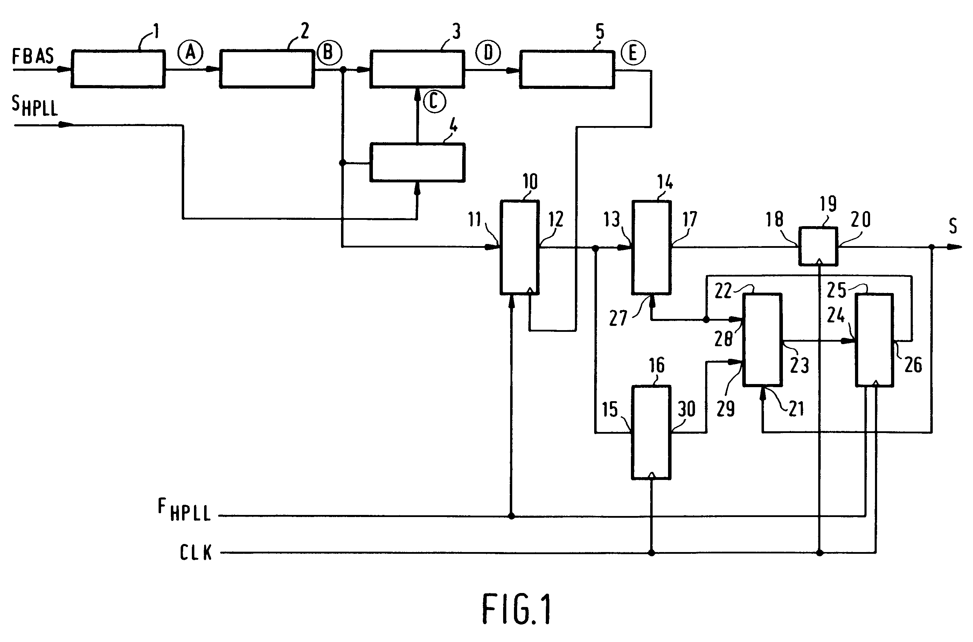

Ein in Fig. 1 dargestelltes Prinzipschaltbild zeigt eine Schaltungsanordnung zur Detektion von Horizontal-Synchronisationsimpulsen. Diese Schaltungsanordnung arbeitet mit einer Abtrennstufe, welche zu bestimmten Zeitpunkten den Pegel des Fernsehsignals feststellt und in Abhängigkeit dieses Pegels den Schneidepegel festlegt.

Der eigentlichen Schaltungsanordnung zur Detektion der Synchronisationsimpulse ist ein Tiefpaß 1 vorgeschaltet, in welchem ein diesem Tiefpaß zugeführtes digitales Fernsehsignal von hochfrequenten Signalanteilen befreit wird. Dem Tiefpaß ist ein Komparator 2 nachgeschaltet. In diesem Komparator 2 wird das Ausgangssignal des Tiefpasses 1 zunächst invertiert und dann mit einem festen Schneidepegel verglichen. Dieser Schneidepegel ist so gewählt, daß er vor allem die aktiven Signalanteile, welche den Bildinhalt enthalten, abtrennt. Es wird in diesem Komparator 2 noch keine Abtrennung ausschließlich der Synchronisationsimpulse vorgenommen. Dem Komparator 2 ist ein weiterer Komparator 3 nachgeschaltet, welcher diejenigen Signalanteile des vom Komparator 2 gelieferten Signals abtrennt, die einen variablen Schneidepegel in Richtung auf den Spitzenpegel überschreiten. Dieser variable Schneidepegel wird mittels eines Synchronisationsverstärkers 4 ermittelt, welcher zu bestimmten Zeitpunkten den Pegel des von dem Komparator 2 gelieferten Signals feststellt und den variablen Schneidepegel auf die halbe Amplitude dieses festgestellten Pegelwertes festlegt. Der Synchronisationsverstärker 4 kann beispielsweise mittels einer der in der Fig. 1 dargestellten Schaltungsanordnung nachgeschalteten, in der Figur nicht dargestellten Phasenregelkreises gesteuert werden.

Dem Komparator 3 ist ein Impulsformer 5 nachgeschaltet, welcher Positive Flanken des von dem Komparator 3 gelieferten Signals detektiert und mit einer vorgebbaren Zeitverzögerung einen Impuls generiert.

Die von dem Impulsformer 5 generierten Impulse werden der digitalen Schaltungsanordnung zur Detektion der Horizontal-Synchronisationsimpulse zugeführt und dienen dazu, in dieser ein Register 10 zu takten, dessen Signaleingang 11 das digitale, tiefpaßgefilterte, invertierte und in dem Komparator 2 mit einem festen Schneidepegel verglichene Fernsehsignal zugeführt ist. Ein Ausgang 12 des Registers 10 ist auf einen ersten Eingang 13 eines Komparators 14 und auf einen Eingang 15 eines Registers 16 geführt. Ein Ausgang 17 des Komparators 14 ist auf einen Eingang 18 eines weiteren Registers 19 geführt, dessen Ausgang 20 die Markierungsimpulse liefert und ferner mit einem Eingang 21 eines Multiplexers 22 verbunden ist. Ein Ausgang 23 des Multiplexers 22 ist auf einen Eingang 24 eines Registers 25 geführt, welches, ebenso wie das Register 19, mittels eines Taktsignales Clk getaktet ist, das dem Abtasttakt des digitalen Fernsehsignals entspricht. Ein Ausgang 26 des Registers 25 ist zum einen mit einem zweiten Eingang 27 des Komparators 14 und zum anderen mit einem ersten Eingang 28 des Multiplexers 22 verbunden. Ein zweiter Eingang 29 des Multiplexers 22 ist mit einem Ausgang 30 des Registers 16 verbunden. Dieses Register 16 ist ebenfalls mittels des Taktsignals Clk getaktet.

Die Register 10 und 25 werden mittels eines Signales zurückgesetzt, welches zu vorgebbaren Zeitpunkten zwischen zwei Synchronisationsimpulsen auftritt und welches beispielsweise einem in der Figur nicht dargestellten, der Schaltungsanordnung nachgeschalteten Phasenregelkreis entnommen sein kann.

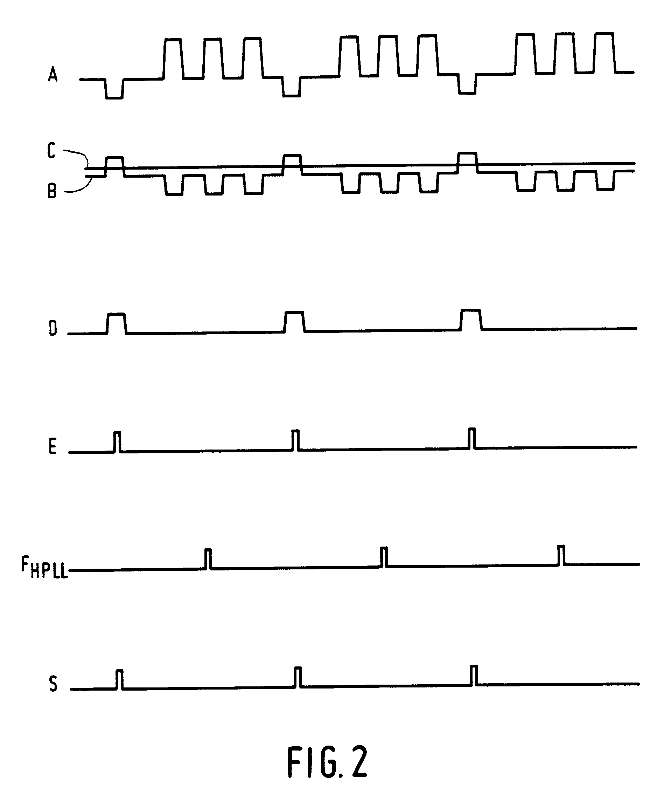

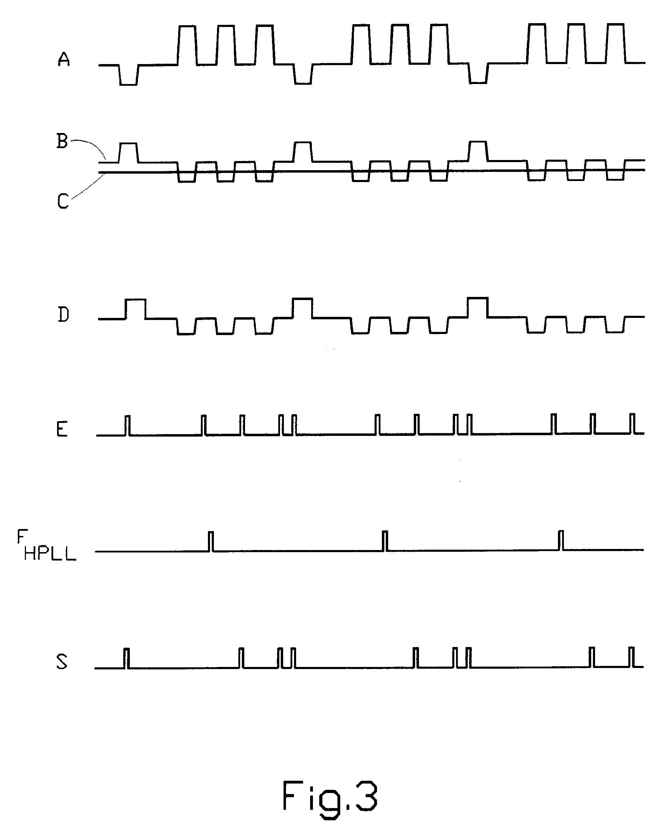

Die Arbeitsweise der in Fig. 1 dargestellten Schaltungsanordnung wird im folgenden anhand einiger in der Schaltungsanordnung auftretender Signale, welche in den Fig. 2 und 3 dargestellt sind, näher erläutert.

Bei der Darstellung gemäß Fig. 2 ist davon ausgegangen, daß der in dem Synchronisationsverstärker 4 festgelegte Schneidepegel einen richtigen Wert aufweist.

In Fig. 2 ist ein Signal A dargestellt, welches das Ausgangssignal des Tiefpaßfilters 1 darstellt. Es handelt sich bei diesem Signal um ein digitales Fernsehsignal, welches in der Darstellung in Fig. 2 für etwa drei Bildzeilen dargestellt ist. Es ist dabei zu berücksichtigen, daß das Signal in Fig. 2 nur der Deutlichkeit halber in analoger Form dargestellt wurde. Tatsächlich handelt es sich um diskrete Abtastwerte eines digitalen Fernsehsignals.

Ein ferner in der Fig. 2 dargestelltes Signal B stellt das invertierte Signal A dar, das mit einem festen, in der Fig. 2 nicht dargestellten Schneidepegel verglichen wurde, welcher vor allem dazu dient, die aktiven Signalanteile abzutrennen. Das Signal B stellt das Ausgangssignal des Komparators 2 dar.

In dem Komparator 3 wird dieses Signal B mit einem in dem Synchronisationsverstärker 4 generierten Schneidepegel, der in der Figur mit dem Signalverlauf C dargestellt ist, verglichen. Bei diesem in dem Komparator 3 vorgenommenen Vergleich werden diejenigen Signalanteile des Signales B abgetrennt, welche den Schneidepegel C in Richtung auf die Synchronisationsimpulse bzw. den Spitzenpegel überschreiten. Diese abgetrennten Signalanteile stellen die Ausgangssignale des Komparators 3 dar und sind in der Fig. 2 mittels eines Signalverlaufes D dargestellt. Es ist ersichtlich, daß in dem Signalverlauf D immer dann Impulse auftreten, wenn der Pegel des Signales B oberhalb des Schneidepegels C liegt.

Die Impulse D werden in dem Impulsformer 5 zu Impulsen weiterverarbeitet, welche nach jeder positiven Flanke des Signales D mit einer vorgebbaren Zeitverzögerung generiert werden, die beispielsweise mittels eines Zählers vorgenommen sein kann. Diese Ausgangsimpulse des Impulsformers 5 sind in der Fig. 2 mittels eines Signalsverlaufs E dargestellt.

Es sei an dieser Stelle erwähnt, daß diese Impulse gemäß Signalverlauf E nach dem Stande der Technik direkt als detektierte Synchronisationsimpulse eingesetzt werden, also beispielsweise einem nachgeschalteten Phasenregelkreis zugeführt werden.

In der Schaltungsanordnung nach Fig. 1 dienen diese Impulse jedoch dazu, das Register 10 zu takten. Es wird also immer dann ein neuer Wert des Signales B in das Register 10 eingelesen, wenn das Signal E einen Impuls aufweist. In dem Komparator 14 wird nun der in dem Register 10 abgespeicherte Abtastwert mit einem in dem Register 25 gespeicherten Abtastwert verglichen. Da das Register 10 nur dann mit einem neuen Abtastwert geladen wird, wenn ein Impuls E auftritt, wird ein neuer Vergleich in dem Komparator 14 also nur dann vorgenommen, wenn in dem Komparator 3 Signalanteile des Fernsehsignals abgetrennt wurden. Sollte der in dem Register 10 abgespeicherte Abtastwert größer sein als der in dem Register 25 abgespeicherte Abtastwert, so liefert der Komparator 14 an seinem Ausgang 17 einen Impuls, der in das Register 19 eingelesen wird. Mit dem nächsten Takt des Taktsignals Clk erscheint dieser Impuls am Ausgang 20 des Registers 19 und stellt einen Markierungsimpuls dar. Dieser Impuls wird gleichzeitig dazu eingesetzt, den Multiplexer 22 von seinem Eingang 28 auf seinen Eingang 29 umzuschalten. Dies führt dazu, daß der vorher in das Register 16 eingelesene aktuelle Abtastwert, der in Register 10 abgespeichert ist, dem Eingang 24 des Registers 25 zugeführt wird und mit dem nächsten Takt des Taktsignals Clk in diesem abgespeichert wird. Im Ergebnis wird also, sofern in dem Signal E ein Impuls erscheint, immer dann ein aktueller Abtastwert in das Register 25 eingelesen, wenn der aktuelle Abtastwert gemäß Register 10 größer ist als der vorher in dem Register 25 abgespeicherte Abtastwert.

Das Ausgangssignal des Registers 19, welches sowohl die Markierungsimpulse darstellt, wie auch das Steuersignal für den Multiplexer 22, ist in der Fig. 2 mittels eines Signalverlaufes S dargestellt. Bei dem in der Fig. 2 dargestellten Fall, daß der Schneidepegel C richtig festgelegt ist, treten Impulse in diesem Signal S nur zu den Zeiten auf, in denen das Signal A bzw. B einen Synchronisationsimpuls enthält.

In der Fig. 2 ist ferner ein Signal F_{HPLL} dargestellt, welches dazu dient, die Register 10 und 25 zu vorgebbaren Zeitpunkten zurückzusetzen. Dieses Signal kann beispielsweise aus einem in der Figur nicht dargestellten, der Schaltungsanordnung nachgeschalteten Phasenregelkreis entnommen sein. Mit jedem Impuls des Signales F_{HPLL} wird also der Vergleich der aktuellen Abtastwerte mit dem abgespeicherten in der Weise von vorne begonnen, daß zunächst ein Vergleich mit dem Signalwert Null stattfindet, da das Register 25 mittels des Impulses des Signals F_{HPLL} gelöscht wurde. Dies führt dazu, daß der erste mit einem Impuls des Signales E in das Register 10 eingelesene Abtastwert auch in das Register 25 eingelesen wird, da dieser in das Register 10 eingelesene Abtastwert im allgemeinen größer sein wird als Null. Danach werden nur noch dann neue Abtastwerte in das Register 25 eingelesen, wenn diese größer sind als der vorher in diesem Register abgespeicherte Abtastwert und wenn gleichzeitig ein Impuls E auftritt.

Bei dem in Fig. 2 dargestellten Beispielsfall wird in dem Zeitintervall zwischen zwei Impulsen des Signales F_{HPLL} das Register 25 nur jeweils einmal neu geladen, da in diesem Zeitraum das Fernsehsignal den variablen Schneidepegel nur einmal überschreitet. Dies liegt daran, daß in diesem Beispielsfalle der variable Schneidepegel gemäß Signal C in korrekter weise festgelegt wurde.

In Fig. 3 sind die gleichen Signale wie in Fig. 2 dargestellt, jedoch ist in diesem Falle der variable Schneidepegel C falsch festgelegt. Dies rührt daher, daß die Zeitpunkte, in denen der Synchronisationsverstärker 4 den Pegel des Fernsehsignals feststellt, in Abhängigkeit dessen dann der variable Schneidepegel festgelegt wird, falsch gewählt sind. Sind diese Zeitpunkte beispielsweise einem der Schaltungsanordnung nach Fig. 1 nachgeschalteten Phasenregelkreis entnommen, so rührt dies daher, daß der Phasenregelkreis nicht richtig aufsynchronisiert ist.

Die in Fig. 3 dargestellten Signalverläufe A und B sind mit denen nach Fig. 2 identisch.

Der variable Schneidepegel nach Signalverlauf C weist jedoch infolge der oben beschriebenen Zusammenhänge einen falschen Wert auf. Dies führt dazu, daß nicht nur die Synchronisationsimpulse mitsamt der Schwarzschulter, sondern auch Signalanteile abgetrennt werden. Dies führt in dem in Fig. 3 gewählten Beispiel dazu, daß das Signal D, also das Ausgangssignal des Komparators 3, zwischen zwei Synchronisationsimpulsen des Signales A mehrfach seinen Wert wechselt. Mit jeder Positiven Flanke des Signales D wird in dem Impulsformer 5 ein Impuls des Signales E generiert. Mit jedem Impuls des Signales E wird in das Register 10 ein neuer Abtastwert eingelesen und dieser Abtastwert mittels des Komparators 14 mit dem vorher in dem Register 25 abgespeicherten Abtastwert verglichen. Dieser Vorgang beginnt mit jedem Impuls des Signales F_{HPLL} von neuem.

In dem in Fig. 3 dargestellten Beispiel werden zwischen zwei Impulsen des Signales F_{HPLL} jeweils drei Markierungsimpulse generiert. Der erste Markierungsimpuls gemäß des Signalverlaufes S nach dem Impuls des Signals F_{HPLL} wird generiert, da zu diesem Zeitpunkt Signalanteile des Fernsehsignals abgetrennt wurden und der einhergehende Abtastwert größer ist als der in dem Register 25 abgelegte, welcher zu diesem Zeitpunkt noch Null ist.

Der darauffolgende, zweite Markierungsimpuls wird generiert, da zu diesem Zeitpunkt ebenfalls ein Impuls des Signals E auftritt, also Signalanteile aus dem Fernsehsignal abgetrennt wurden, und darüber hinaus der einhergehende Abtastwert des Signales B größer ist als der mit dem ersten Impuls des Signales E bzw. S einhergehende Abtastwert. In dem in der Fig. 3 dargestellten Beispiel ist dies deshalb der Fall, weil der zweite Markierungsimpuls auf die Flanke der Schwarzschulter zurückgeht, welche in der invertierten Form des Signales B einen etwas größeren Signalwert aufweist als das mit dem ersten Impuls einhergehende aktive, den Bildinhalt enthaltende Signal.

Der jeweils letzte, zwischen zwei Löschvorgängen des Abtastwert-Speichers, welche mittels der Impulse des Signales F_{HPLL} vorgenommen werden, auftretende Markierungsimpuls des Signales S markiert einen detektierten Synchronisationsimpuls.

Bei dem in Fig. 3 dargestellten Beispiel, in dem der Wert des Schneidepegels gemäß Signalverlauf C grob falsch festgelegt ist, ist dieser letzte Synchronisationsimpuls vor dem Löschvorgang ausgelöst durch die Schwarzschulter. Da die Schwarzschulter im Bereich vor dem Synchronisationsimpuls jedoch relativ kurz ist, ist dieser Markierungsimpuls gegenüber dem tatsächlich in dem Signal B enthaltenene Synchronisationsimpuls zeitlich nur geringfügig falsch angeordnet. Ein beispielsweise nachgeschalteter Phasenregelkreis wird jedoch bereits nahezu richtig aufsynchronisieren, so daß auch diejenigen Zeitpunkte, in denen der Synchronisationsverstärker den Pegel des Signales B zur Festlegung des Wertes des variablen Schneidepegels detektiert, bereits nahezu richtig werden. Dies führt dazu, daß der Schneidepegel langsam erhöht wird. Im Verlaufe dieser Erhöhung des Schneidepegels C wird dann bereits der Synchronisationsimpuls zur exakten Zeit detektiert, so daß der Phasenregelkreis exakt aufsynchronisiert. Dies wiederum führt dazu, daß der Schneidepegel, da nun zu den richtigen Zeitpunkten mittels des Synchronisationsverstärkers eine Pegelüberprüfung vorgenommen wird, sich weiter erhöht, bis der in Fig. 2 dargestellte Wert des Schneidepegels C erreicht ist. Es ist dann ausgehend von dem in Fig. 3 dargestellten, desynchronisierten Zustand eines nachgeschalteten Phasenregelkreises ein richtig aufsynchronisierter Zustand hergestellt, in dem dann die Signalverläufe gemäß Fig. 2 auftreten.

Die in der Schaltungsanordnung gemäß Fig. 1 eingesetzte Abtrennstufe, welche mittels der Komparatoren 2 und 3, des Synchronisationsverstärkers 4 und des Impulsformers 5 aufgebaut ist, kann selbstverständlich auch sehr viel einfacher aufgebaut sein, beispielsweise nur mittels des Synchronisationsverstärkers 4 und des Komparators 3. Darüber hinaus kann der Schneidepegel auch auf andere Weise festgelegt werden, beispielsweise indem versucht wird, die Flanken der Synchronisationsimpulse mittels Messung von deren Flankensteilheit zu detektieren.

## Patentansprüche

1. Digitale Schaltungsanordnung zur Detektion von in einem digitalen Fernsehsignal enthaltenen Horizontal- oder Vertikal-Synchronisationsimpulsen, deren Amplitude sich etwa bis zu einem Spitzenpegel hin erstreckt, mit einer Abtrennstufe (3), in der diejenigen Signalanteile des Fernsehsignals, die einen Schneidepegel (C) in Richtung auf den Spitzenpegel überschreiten, abgetrennt werden,
dadurch gekennzeichnet, daß ein Pegel-Detektor vorgesehen ist, welcher während der Zeiten, in denen in der Abtrennstufe (3) Fernsehsignalanteile abgetrennt werden und gleichzeitig der aktuelle Abtastwert einen abgespeicherten Abtastwert in Pegel-Richtung der Synchronisationsimpulse überschreitet, den abgespeicherten Abtastwert durch den akutellen ersetzt und einen Markierungsimpuls (S) generiert, daß in jedem Zeitintervall zwischen aufeinanderfolgenden Synchronisationsimpulsen der gespeicherte Abtastwert zu einem vorgebbaren, für alle Zeitintervalle identischen Zeitpunkt gelöscht wird und daß der jeweils letzte Markierungsimpuls (S) vor dem Löschen des gespeicherten Abtastwertes einen detektierten Synchronisationsimpuls markiert.

2. Digitale Schaltungsanordnung nach Anspruch 1,
dadurch gekennzeichnet, daß der Zeitpunkt, zu dem in allen Intervallen der gespeicherte Abtastwert gelöscht wird, am Ende des aktiven, den Bildinhalt enthaltenden Teils einer Bildzeile liegt.

3. Digitale Schaltungsanordnung nach Anspruch 1 oder 2,
dadurch gekennzeichnet, daß der Schaltungsanordnung ein einen Zähler aufweisender digitaler Phasenregelkreis nachgeschaltet ist und daß das Löschen des abgespeicherten Abtastwertes bei einem vorgebbaren Zählerstand des Zählers ausgelöst wird.

4. Digitale Schaltungsanordnung nach Anspruch 3,
dadurch gekennzeichnet, daß die Markierungsimpulse (S) einem in dem Phasenregelkreis vorgesehenen Phasenkomparator zugeführt sind und daß nur der letzte, vor dem vorgebbaren Zählerstand ermittelte Phasenmeßwert einem dem Phasenkomparator nachgeschalteten Schleifenfilter zugeführt wird.

5. Digitale Schaltungsanordnung nach einem der Ansprüche 1 bis 4,
dadurch gekennzeichnet, daß in dem Pegel-Detektor ein Komparator (14) vorgesehen ist, welcher während der Zeiten, in denen in der Abtrennstufe Fernsehsignalanteile abgetrennt werden, den aktuellen Abtastwert des Fernsehsignals mit einem in einem Speicher (25) abgelegten Abtastwert vergleicht und in dem Falle, daß der aktuelle Abtastwert in Pegel-Richtung der Synchronisationsimpulse größer ist als der abgespeicherte Abtastwert, ein Signal zur Abspeicherung des aktuellen Abtastwertes in dem Speicher (25) erzeugt.

6. Digitale Schaltungsanordnung nach Anspruch 5,
dadurch gekennzeichnet, daß das Signal zur Abspeicherung des aktuellen Abtastwertes auch als Markierungsimpuls (S) dient.

## Claims

1. A digital circuit arrangement for detecting horizontal or vertical synchronizing pulses which are contained in a digital television signal and whose amplitude extends to approximately a peak level, including a separating stage (3) in which those signal portions of the television signals that exceed a cut-off level (C) in the direction of a peak level, are separated, characterized in that a level detector is provided which, during those time intervals in which television signal portions are separated in the separating stage (3) and simultaneously the instantaneous sampling value exceeds a stored sampling value in the level direction of the synchronizing pulses, substitutes the instantaneous sampling value for the stored sampling value and generates a marker pulse (S), that in each time interval between consecutive synchronizing pulses the stored sampling value is erased at a predetermined instant which is the same for all the time intervals and that always the last marker pulse (S) before erasing of the stored sampling value marks a detected synchronizing pulse.

2. A digital circuit arrangement as claimed in Claim 1, characterized in that the instant at which in all intervals the stored sampling value is erased, is located at that end of the active portion of a picture line that contains the picture content.

3. A digital circuit arrangement as claimed in Claim 1 or 2, characterized in that a digital phase control loop including a counter is arranged subsequent to the circuit arrangement and that erasing of the stored sampling value is triggered at a presettable counting position of the counter.

4. A digital circuit arrangement as claimed in Claim 3, characterized in that the marker pulses (S) are applied to a phase comparator provided in the phase control loop and that only the phase measuring value determined last before the presettable counting position is applied to a loop filter arranged subsequent to the phase comparator.

5. A digital circuit arrangement as claimed in any one of Claims 1 to 4, characterized in that the level detector is provided with a comparator (14) which, during the time intervals in which television signal portions are separated in the separating stage, compares the instantaneous sampling value of the television signal to a sampling value stored in a store (25) and in the case in which the instantaneous sampling value in the direction of the level of the synchronizing pulse exceeds the stored sampling value, generates a signal for storing the instantaneous sampling value in the store (25).

6. A digital circuit arrangement as claimed in Claim 5, characterized in that the signal for storing the instantaneous sampling value is also used as a marker pulse (S).

## Revendications

1. Montage de circuit numérique pour détecter des impulsions de synchronisation horizontale ou verticale contenues dans un signal de télévision numérique, impulsions dont l'amplitude s'étend approximativement jusqu'à un niveau maximum, comportant un étage de séparation (3), dans lequel sont séparées les fractions du signal de télévision qui dépassent un niveau de coupure (C) dans la direction du niveau maximum, caractérisé en ce qu'il est prévu un détecteur de niveau, qui, pendant les moments où des fractions du signal de télévision sont séparées dans l'étage de séparation (3) et où, simultanément, la valeur d'échantillonnage présente dépasse une valeur d'échantillonnage mémorisée dans la direction du niveau des impulsions de synchronisation, remplace la valeur d'échantillonnage mémorisée par la valeur d'échantillonnage présente et génère une impulsion de marquage (S), qui, dans chaque intervalle de temps entre des impulsions de synchronisation successives, la valeur d'échantillonnage mémorisée à un moment prédéterminable identique pour tous les intervalles de temps est effacée et que la dernière impulsion de marquage (S) respective marque, avant l'effacement de la valeur d'échantillonnage mémorisée, une impulsion de synchronisation détectée.

2. Montage de circuit numérique selon la revendication 1, caractérisé en ce que le moment où la valeur d'échantillonnage mémorisée est effacée dans tous les intervalles, se situe à la fin de la partie active d'une ligne d'image.

3. Montage de circuit numérique selon la revendication 1 ou 2, caractérisé en ce qu'en aval du circuit est monté un circuit régulateur de phase numérique comportant un compteur et l'effacement de la valeur d'échantillonnage mémorisée est déclenché lors d'un état de comptage prédéterminable du compteur.

4. Montage de circuit numérique selon la revendication 3, caractérisé en ce que les impulsions de marquage (S) sont acheminées à un comparateur de phase prévu dans le circuit régulateur de phase et seule la dernière valeur de mesure de phase obtenue avant le comptage prédéterminable est acheminée à un filtre de boucle monté en aval du comparateur de phase.

5. Montage de circuit numérique selon l'une quelconque des revendications 1 à 4, caractérisé en ce que, dans le détecteur de niveau est prévu un comparateur (14) qui compare, au cours des moments où des fractions du signal de télévision sont séparées dans l'étage de séparation, la valeur d'échantillonnage présente du signal de télévision à une valeur d'échantillonnage stockée dans une mémoire (25) et, dans le cas où la valeur d'échantillonnage présente est plus grande, dans la direction du niveau des impulsions de synchronisation, que celle de la valeur d'échantillonnage stockée, produit un signal pour mémoriser la valeur d'échantillonnage présente dans la mémoire (25).

6. Montage de circuit numérique selon la revendication 5, caractérisé en ce que le signal permettant de mémoriser la valeur d'échantillonnage présente sert également d'impulsion de marquage (S).
